# EUROPEAN PATENT APPLICATION

(11) **EP 4 708 038 A1**
(43) Date of publication of application: **11.03.2026**
(21) Application number: 24838302.8
(22) Date of filing: 29.02.2024
(51) Int. Cl.: G06F 9/4401, G06F 3/14, G09G 3/3208

(54) **DISPLAY CONTROL METHOD, ELECTRONIC DEVICE, AND STORAGE MEDIUM**

(30) Priority: 12.07.2023 CN 202310857487
(71) Applicant: Honor Device Co., Ltd., Shenzhen, Guangdong 518040 (CN)
(72) Inventor: ZHUANG, Ruigang, Shenzhen, Guangdong 518040 (CN); LIU, Fuhou, Shenzhen, Guangdong 518040 (CN)
(74) Representative: Isarpatent
(86) International application number: PCT/CN2024/079213
(87) International publication number: WO 2025/011041

(57) **Abstract**

This application relates to the field of display technologies, and provides a display control method, an electronic device, and a storage medium. After a screen-on triggering condition is satisfied, a display screen is instructed to power on, a start instruction is sent to trigger initiation of the display screen, and a completion message is immediately returned to trigger processes such as sending an image and sending a backlight parameter. Then it is determined whether a duration for which the start instruction is sent satisfies a delay condition. If the delay condition is satisfied, a display driver sends a preparation instruction to the display screen to indicate that initialization is completed. If the delay condition is not satisfied, the display driver then sends the preparation instruction to the display screen after the delay condition is satisfied. Then the display screen is turned on based on the backlight parameter, and the display screen displays a lock screen interface, thereby waking up the display screen. In a solution of this application, the start instruction and the preparation instruction are separately sent, so that the steps such as sending an image and sending a backlight parameter are performed during power-on and initialization of the display screen, thereby reducing time of a wake-up process of the display screen, and increasing a screen-on speed.

## Description

This application claims priority to Chinese Patent Application No. 202310857487.4, filed with the China National Intellectual Property Administration on July 12, 2023 and entitled "DISPLAY CONTROL METHOD, ELECTRONIC DEVICE, AND STORAGE MEDIUM", which is incorporated herein by reference in its entirety.

### TECHNICAL FIELD

This application relates to the field of communication technologies, and in particular, to a display control method, an electronic device, and a storage medium.

### BACKGROUND

With the rapid development of electronic technologies, electronic devices such as a smartphone and a tablet computer have increasing functions, and have become indispensable tools in lives and work of people. Using a mobile phone as an example, a user may turn on or turn off a display screen of the mobile phone at any time based on an actual use requirement. For example, when a display screen of a mobile phone is turned off, the user may trigger the mobile phone to turn on the display screen in a manner such as pressing a power button or double-tapping a screen. The display screen is woken up from a dormant state and is switched to a screen-on state. In this case, all pixels of the display screen are turned on. After the display screen is woken up, the display screen may display a lock screen interface, or display a system desktop.

Currently, for a scenario that a display screen of the electronic device is awakened from the dormant state, problems such as long wake-up time and slow screen-on exists.

### SUMMARY

This application provides a display control method, an electronic device, and a storage medium, which reduces time of a wake-up process of the display screen, and can increase a screen-on speed, thereby improving user experience.

According to a first aspect, this application provides a display control method. The method is applied to an electronic device including a display screen. The display screen is provided with a first display integrated chip IC. The method includes:

A display driver receives a power-on instruction from a power management service module when a preset condition is satisfied. The display driver triggers the first display IC to power on in response to the power-on instruction, and sends a start instruction to the first display IC, where the start instruction is used to instruct the first display IC to initialize. The display driver returns a completion message to the power management service module, where the completion message is used to instruct the first display IC that the power-on and the initialization are completed. The display driver receives a screen-on pattern and sends the screen-on pattern to the first display IC. The display driver receives a backlight parameter. The display driver sends a preparation instruction to the first display IC when a first timing duration is greater than or equal to a first preset duration, where the preparation instruction is used to instruct the first display screen integrated chip IC to complete initialization. The first timing duration is a duration timed starting from a time when the start instruction is sent. The display driver sends the backlight parameter to the first display IC, to trigger the first display IC to turn on the display screen based on the backlight parameter and control the display screen to display the screen-on pattern.

Through the display control method provided in embodiments of this application, when the preset condition is satisfied, the display screen is instructed to power on, the start instruction is sent to trigger initiation of the display screen, and the completion message is immediately returned to trigger processes such as sending an image and sending a backlight parameter. Then, when a delay condition is satisfied, the display driver sends a preparation instruction to the display screen to indicate that initialization is completed. Then the display screen is turned on based on the backlight parameter, and the display screen displays a lock screen interface, thereby waking up the display screen. In a solution of this application, the start instruction and the preparation instruction are separately sent, so that the steps such as sending an image and sending a backlight parameter are performed during power-on and initialization of the display screen, thereby reducing time of a wake-up process of the display screen, and increasing a screen-on speed.

The first preset duration is related to a hardware specification of the first display IC.

In an example, for the first display IC, the first preset duration may be 120 milliseconds (ms).

The start instruction may be an instruction 11, and the instruction 11 is used for instructing to start initialization of parameter configuration after a display screen IC (or referred to as a display IC) is powered on. The preparation instruction may be an instruction 29, and the instruction 29 is used for indicating that the initialization of the parameter configuration of the display screen IC is completed. After being initialized, the display screen IC may normally work, for example, the display screen IC can control the display screen to be turned on and display content.

During actual implementation, the instruction 11 is usually sent first, and then the instruction 29 is sent, so as to power on the display screen IC and complete the initialization of the parameter configuration. It should be noted that after the instruction 11 is sent, the parameter configuration of the display screen IC starts to be initialized. The initialization process needs a period of time. Therefore, after the instruction 11 is sent, a preset interval duration needs to be waited for, and then the instruction 29 is sent, to ensure that the initialization of the parameter configuration of the display screen IC is completed.

It should be noted that the display driver sequentially sends the instruction 11 and the instruction 29 to the display screen IC based on a preset time interval (namely, the first preset duration), which indicates that the display screen IC is initialized, is well prepared, and can execute the display task sent by the display driver.

It should be noted that for display screen ICs of different models, different preset interval durations are specified for the instruction 11 and the instruction 29. In an example, for the first display IC, the preset interval duration specified for the instruction 11 and the instruction 29 is 120 ms. In other words, after the instruction 11 is sent, the instruction 29 is sent at an interval of 120 ms. In addition, a time difference between a sending time of the instruction 29 and a screen-on time is 0 ms. In other words, after the instruction 29 is sent, screen-on is immediately triggered. A time difference between a sending time of the instruction 11 and a screen-on time is 120 ms. A specific value of the first preset duration may be determined based on an actual use requirement. This is not limited in embodiments of this application.

In the related art, after a user triggers screen-on by an operation such as pressing a power button, power-on and initialization of the display screen IC (which consumes T1) needs to be completed first. After the power-on and the initialization of the display screen IC are completed, image sending (which consumes T2) is completed. In addition, sending of the backlight parameter (which consumes T3) is completed. In combination, to complete the wake-up process of the display screen, at least T1+T2+T3 needs to be consumed.

Compared with the related art, in the wake-up process of the display screen of this application, after a screen-on triggering event occurs, the display driver immediately performs a power-on process. The instruction 11 is sent first, to trigger the initialization of the display screen IC, and the display driver immediately returns an OK message, to trigger processes of sending the image and sending the backlight parameter. In this way, when the display screen is initialized, the process of sending an image and the process of sending a backlight parameter may be performed.

Then, after the display driver receives the lock screen interface and receives the backlight parameter, the display driver determines whether the timing duration is greater than or equal to 120 ms. If the timing duration is greater than or equal to 120 ms, the instruction 29 is sent, or if the timing duration is less than 120 ms, the instruction 29 is sent after the 120 ms is reached. The instruction 29 is sent, which indicates that the display screen IC is initialized, is well prepared, and can execute the display task sent by the display driver. In this case, the display screen IC may turn on the display screen based on the backlight parameter and control the display screen to display the lock screen interface, thereby completing wakeup of the display screen.

In the solution of this application, the power-on and the initialization of the display screen IC are completed, which consumes T1 (120 ms). Sending the image and sending the backlight parameter are completed during power-on and initialization of the display screen IC. In combination, to complete the wake-up process of the display screen, at least T1 (120 ms) or slightly greater than T1 (120 ms) needs to be consumed.

In the wake-up process of the display screen of this application, the processes of powering on and initializing the display screen and the processes of sending the image and sending the backlight parameter are simultaneously performed, which obviously reduces time of a wake-up process of the display screen. Therefore, according to the display control method provided in embodiments of this application, the time required for waking up the display screen can be greatly reduced, and the user experience can be improved.

In some possible implementations, after the display driver receives the backlight parameter, the foregoing method further includes: The display driver sends the preparation instruction to the first display IC until the first timing duration is greater than or equal to the first preset duration when the first timing duration is less than the first preset duration.

In some possible implementations, the foregoing method further includes: The power management service module sends the screen-on pattern and the backlight parameter to the first display IC in response to the completion message. In some embodiments, the completion message may be a message indicating that the display screen is powered on and initialized. In some other embodiments, the completion message may be a message indicating that the display screen is powered on.

In some possible implementations, that the power management service module sends the screen-on pattern to the first display IC in response to the completion message includes: The power management service module instructs a drawing module to send the screen-on pattern in response to the completion message. The power management service module receives the screen-on pattern from the drawing module, and sends the screen-on pattern to the first display IC.

The screen-on pattern may be a lock screen interface or a system desktop.

In some possible implementations, the foregoing method further includes: The power management service module instructs the drawing module to draw the screen-on pattern when the preset condition is satisfied.

In some possible implementations, that the power management service module sends the backlight parameter to the first display IC in response to the completion message includes: The power management service module instructs a backlight module to send the backlight parameter in response to the completion message. The power management service module receives the backlight parameter from the backlight module, and sends the backlight parameter to the first display IC.

In some possible implementations, the foregoing method further includes: The backlight module determines the backlight parameter based on an ambient light brightness of an environment in which the electronic device is located. For example, a value range of the backlight parameter is (0, 255].

In some possible implementations, the power-on instruction is sent by the power management service module and transmitted by a surface drawing SurfaceFlinger service module and a hardware composition HWC module, and reaches the display driver.

In some possible implementations, the completion message is sent by the display driver, transmitted by the HWC module and the SurfaceFlinger service module, and reaches the power management service module.

In some possible implementations, the preset condition is: receiving an operation of pressing a power button by a user when the display screen is in a screen-off state; or receiving a preset operation performed by the user on the display screen when the display screen is in a screen-off state. The preset condition is also referred to as a screen-on triggering condition.

According to a second aspect, this application provides a display control method. The method is applied to an electronic device including a display screen. The display screen is provided with a second display IC. The method includes:

A display driver receives a power-on instruction from a power management service module when a preset condition is satisfied. The display driver triggers the second display IC to power on in response to the power-on instruction, and sends a start instruction to the second display IC, where the start instruction is used to instruct the second display IC to initialize. The display driver returns a completion message to the power management service module. The display driver receives a screen-on pattern, and sends the screen-on pattern to the second display IC. The display driver receives a backlight parameter. The display driver sends a preparation instruction to the second display IC when a first timing duration is greater than or equal to a second preset duration. Then the display driver sends the backlight parameter to the second display IC when the first timing duration is greater than or equal to a third preset duration, to trigger the second display IC to turn on the display screen based on the backlight parameter and control the display screen to display the screen-on pattern. The third preset duration is greater than the second preset duration, and the first timing duration is a duration timed starting from a time when the start instruction is sent.

Through the display control method provided in embodiments of this application, after a screen-on triggering condition is satisfied, the display screen is instructed to power on, the start instruction is sent to trigger initiation of the display screen, and the completion message is immediately returned to trigger processes such as sending the image and sending the backlight parameter. Then, when a delay condition is satisfied, the display driver sends a preparation instruction to the display screen to indicate that initialization is completed. If the delay condition is not satisfied, the display driver then sends the preparation instruction to the display screen after the delay condition is satisfied. Then the display screen is turned on based on the backlight parameter, and the display screen displays a lock screen interface, thereby waking up the display screen. In a solution of this application, the start instruction and the preparation instruction are separately sent, so that the steps such as sending an image and sending a backlight parameter are performed during power-on and initialization of the display screen, thereby reducing time of a wake-up process of the display screen, and increasing a screen-on speed.

The second preset duration and the third preset duration are related to a hardware specification of the second display IC.

In an example, for the second display IC, the second preset duration may be 80 milliseconds, and the third preset duration may be 120 milliseconds.

It should be noted that for display screen ICs provided by different manufacturers, different preset interval durations are specified for the instruction 11 and the instruction 29. In an example, for the second display IC, an interval duration (the second preset duration) between the instruction 11 and the instruction 29 is 80 ms, and a time difference between a sending time of the instruction 29 and a screen-on time is 40 ms. In other words, only after the 11 instruction is sent, the 29 instruction is sent at an interval of 80 ms, and only after the 29 instruction is sent, the screen is turned on after an interval of 40 ms. A time difference (the third preset duration) between the sending time of the instruction 11 and the screen-on time is 120 ms.

After the display driver receives the backlight parameter, the method further includes: The display driver sends the preparation instruction to the second display IC until the first timing duration is greater than or equal to the second preset duration when the first timing duration is less than the second preset duration.

It should be noted that the display driver determines whether the first timing duration is greater than or equal to the second preset duration. If the first timing duration is greater than or equal to the second preset duration, the delay condition is satisfied, and the display driver sends the preparation instruction to the display screen to indicate that initialization is completed. If the first timing duration is less than the second preset duration, the delay condition is not satisfied, and the display driver then sends the preparation instruction to the display screen until the first timing duration is greater than or equal to the second preset duration and after the delay condition is satisfied.

In some possible implementations, after the display driver sends the preparation instruction to the second display IC, the foregoing method further includes: The display driver sends the backlight parameter to the second display IC until the first timing duration is greater than or equal to the third preset duration when the first timing duration is less than the third preset duration.

In some possible implementations, the foregoing method further includes: The power management service module sends the screen-on pattern and the backlight parameter to the second display IC in response to the completion message.

According to a third aspect, this application provides a display control apparatus. The apparatus includes units configured to perform the method in to the first aspect. The apparatus may correspondingly perform the method described in the first aspect. For relevant description of the units in the apparatus, reference may be made to the description of the first aspect. For brevity, details are not described herein again.

The method in the first aspect may be implemented by hardware or may be implemented by hardware executing corresponding software. The hardware or the software includes one or more modules or units corresponding to the function, for example, a processing module or unit and a display module or unit.

According to a fourth aspect, this application provides an electronic device. The electronic device includes a display screen, a processor, a processor, and a computer program or instructions stored in the memory. The processor is configured to execute the computer program or instructions, to cause the method in the first aspect to be performed.

According to a fifth aspect, this application provides a computer-readable storage medium. The computer-readable storage medium has a computer program (which may also be referred to as instructions or code) stored therein for implementing the method in the first aspect. For example, the computer program, when executed by a computer, causes the computer to perform the method in the first aspect.

According to a sixth aspect, this application provides a chip, including a processor. The processor is configured to read and execute a computer program stored in a memory, to perform the method in the first aspect and any possible implementation of the first aspect. Optionally, the chip further includes the memory, where the memory is connected to the processor through a circuit or a wire.

According to a seventh aspect, this application provides a chip system, including a processor. The processor is configured to read and execute a computer program stored in a memory, to perform the method in the first aspect and any possible implementation of the first aspect. Optionally, the chip system further includes a memory, where the memory is connected to the processor through a circuit or a wire.

According to an eighth aspect, this application provides a computer program product. The computer program product includes a computer program (which may also be referred to as instructions or code). The computer program, when executed by an electronic device, causes the electronic device to implement the method in the first aspect.

It may be understood that for beneficial effects of the second aspect to the eighth aspect, reference may be made to the related descriptions in the first aspect. Details are not described herein.

### BRIEF DESCRIPTION OF DRAWINGS

FIG. 1A and FIG. 1B are a schematic diagram of an application scenario of a display control method according to an embodiment of this application;
FIG. 2A and FIG. 2B are a schematic diagram of an improved process in a display control method according to an embodiment of this application;
FIG. 3A and FIG. 3B are a schematic diagram of a latency parameter between an instruction 11 and an instruction 29 in a display control method according to an embodiment of this application;
FIG. 4A and FIG. 4B are a schematic diagram of comparison between a display control method and the related art according to an embodiment of this application;
FIG. 5 is a schematic structural diagram of an electronic device according to an embodiment of this application;
FIG. 6 is a schematic diagram of a software architecture of an electronic device according to an embodiment of this application;
FIG. 7 is a schematic flowchart of a display control method according to the related art;
FIG. 8 is a timing diagram of a display control method according to the related art;
FIG. 9 is a schematic diagram of a time consumption of a display control method according to the related art;
FIG. 10 is a schematic flowchart of a display control method according to an embodiment of this application;
FIG. 11 is a timing diagram of a display control method according to an embodiment of this application;
FIG. 12A and FIG. 12B are a schematic diagram of a time consumption of a display control method according to an embodiment of this application; and
FIG. 13 is another timing diagram of a display control method according to an embodiment of this application.

### DESCRIPTION OF EMBODIMENTS

To make objectives, technical solutions, and advantages of embodiments of this application clearer, technical solutions in embodiments of this application are clearly and completely described below with reference to drawings in embodiments of this application. Apparently, the embodiments to be described are a part rather than all of embodiments of this application. All other embodiments obtained by a person skilled in the art based on embodiments of this application without creative efforts shall fall within the protection scope of this application.

The term "and/or" used herein describes an association relationship between associated objects and represents that three relationships may exist. For example, A and/or B may represent the following three cases: only A exists, both A and B exist, and only B exists. The symbol "/" used herein represents an "or" relationship between associated objects. For example, A/B means A or B.

In the specification and the claims, terms "first", "second", and the like are intended to distinguish between different objects but do not indicate a particular order of the objects. In descriptions of embodiments of this application, unless otherwise stated, "a plurality of" means two or more. For example, a plurality of processing units means two or more processing units. A plurality of elements means two or more elements, and the like.

In embodiments of this application, a word such as "in an example" or "for example" is used to represent giving an example, an illustration, or a description. Any embodiment or design solution described as "in an example" or "for example" in embodiments of this application should not be explained as being more preferred or having more advantages than another embodiment or design solution. Exactly, use of the words such as "in an example" or "for example" is intended to present a concept in a specific manner.

With the rapid development of electronic technologies, electronic devices such as a smartphone and a tablet computer have increasing functions, and have become indispensable tools in lives and work of people. Using a mobile phone as an example, a user may turn on or turn off a display screen of the mobile phone at any time based on an actual use requirement. For example, when a display screen of a mobile phone is turned off, the user may trigger the mobile phone to turn on the display screen in a manner such as pressing a power button or double-tapping a screen.

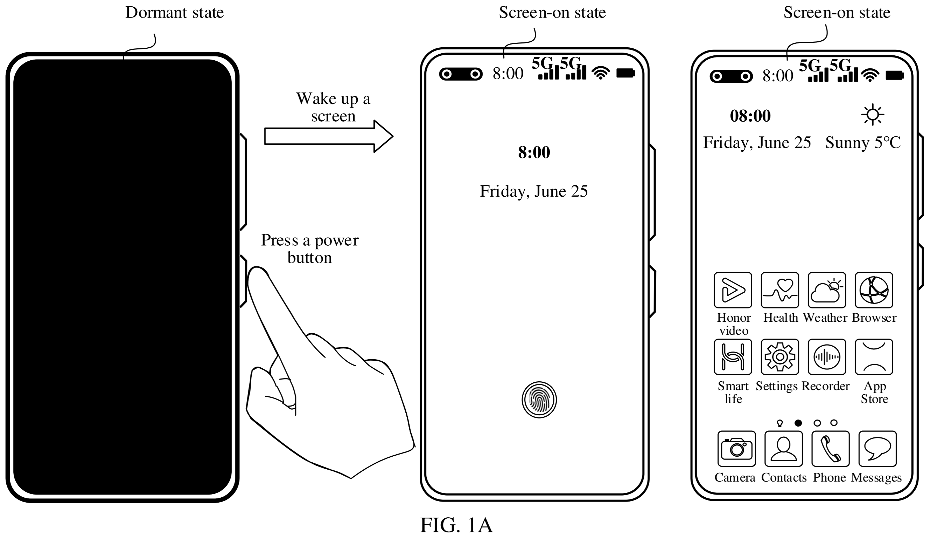

In an example, as shown in FIG. 1A, a display screen of a mobile phone is in a dormant state. When the mobile phone receives an operation of pressing a power button (POWER button) performed by a user, the display screen may be turned on by the mobile phone (which is referred to as screen-on for short).

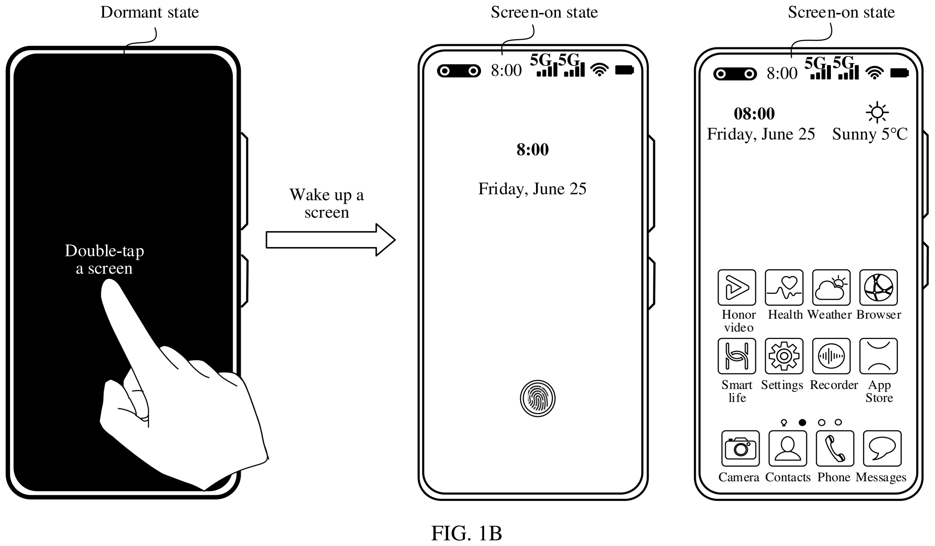

In another example, as shown in FIG. 1B, a display screen of a mobile phone is in a dormant state. When the mobile phone receives an operation of double-tapping the display screen performed by a user, the display screen may be turned on by the mobile phone.

The display screen is woken up from the dormant state and is switched to a screen-on state. In this case, all pixels of the display screen are turned on. After the display screen is woken up, the display screen may display a lock screen interface, or display a system desktop.

Currently, for a scenario that a display screen of the electronic device is awakened from the dormant state, problems such as long wake-up time and slow screen-on exists.

To resolve the problems of long wake-up time and slow screen-on, an embodiment of this application provides a display control method. By improving a software system of the mobile phone, time of a wake-up process of the display screen is reduced, thereby improving user experience. The optimization solution for quickly waking up the display screen in this embodiment of this application can support all current products, and adapt to all versions domestic and overseas, and has universality and commonality.

This application mainly focuses on a research and improvement of how to reduce time of a wake-up process of the display screen.

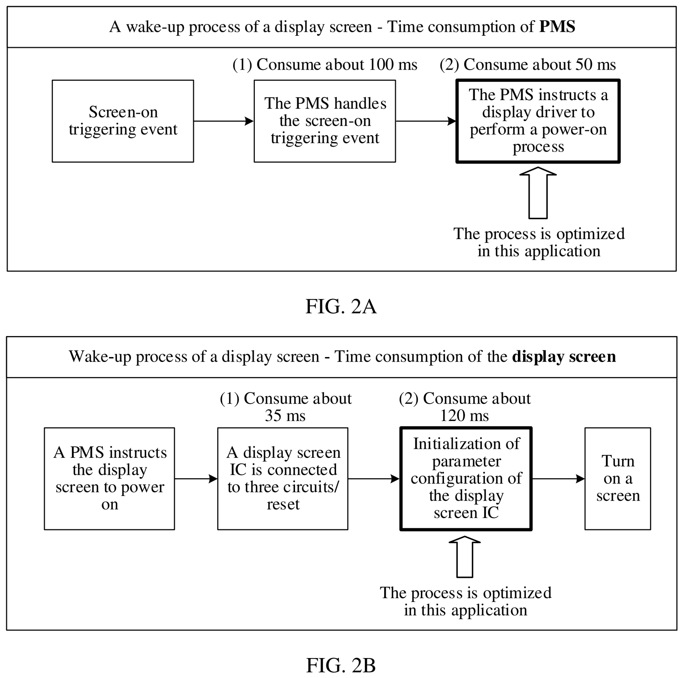

It is found through research that a power management service module (which may be referred to as a PMS module for short) in the electronic device consumes a lot of time when processing the wake-up process of the display screen. As shown in FIG. 2A, in the wake-up process of a display screen, the power management service module consumes about 150 ms. The reasons are as follows.
1) The PMS module processes an event such as pressing a power button, which consumes about 100 ms.
2) The PMS module instructs a display driver to perform a power-on process, which consumes about 50 ms.

It is found through research and analysis that a process corresponding to the foregoing "the PMS module instructs a display driver to perform a power-on process" may be optimized, so as to reduce time of wakeup and increase a screen-on speed.

In addition, it is further found through research that, a lot of time is consumed when the display screen in the electronic device processes the wake-up process of the display screen. As shown in FIG. 2B, in the wake-up process of the display screen, an integrated circuit (integrated circuit, IC) of the display screen consumes about 135 ms. The reasons are as follows.
1) A strict time sequence requirement such as connecting a display screen IC to three circuits and resetting (reset) exist, which consumes 35 ms.
2) Initialization of parameter configuration of a display screen IC requires about 120 ms.

The display screen IC is one of main control components of the display screen (also referred to as a display panel), and is also referred to as a "brain" of the display screen. A main function of a display screen IC is to control brightness and color of the display screen, send a drive signal and image data to a display panel such as an LED in a form of an electrical signal, and control the display screen to display the image data through the drive signal. In other words, the display screen IC is an integrated circuit that controls pixels on the display screen, so that the display screen can display an image and a video.

The three circuits connected to the display screen IC are respectively a power input circuit, a display data output circuit, and a control signal output circuit. The power input means converting a power supply into a voltage required by the display screen, so as to be used by the display screen. The display data output means outputting the display data to the display screen. The control signal output means outputting a control signal to the display screen, so as to control parameters such as brightness and contrast of the display screen.

It is found through research and analysis that a process corresponding to the foregoing "initialization of parameter configuration of a display screen IC" may be optimized, so as to reduce time of wakeup of the display screen and improve a screen-on speed.

It should be noted that for "the PMS module instructs a display driver to perform a power-on process" and "initialization of parameter configuration of a display screen IC", an embodiment of this application provides a corresponding process optimization solution.

For ease of understanding, the instruction 11 and the instruction 29 involved in the process of powering on and initialization of the display screen IC in this embodiment of this application are described below first.

The instruction 11 is equivalent to a start (start) instruction, and is used for indicating that the initialization of the parameter configuration is started after the display screen IC is powered on.

The instruction 29 is equivalent to a preparation (ready) instruction, and is used for indicating that initialization of the parameter configuration of the display screen IC is completed. After being initialized, the display screen IC may normally work, for example, the display screen IC can control the display screen to be turned on and display content.

During actual implementation, the instruction 11 is sent first, and then the instruction 29 is sent, so as to power on the display screen IC and complete the initialization of the parameter configuration. It should be noted that after the instruction 11 is sent, the parameter configuration of the display screen IC starts to be initialized. The initialization process needs a period of time. Therefore, after the instruction 11 is sent, a preset interval duration needs to be waited for, and then the instruction 29 is sent, to ensure that the initialization of the parameter configuration of the display screen IC is completed.

It should be noted that the display driver sequentially sends the instruction 11 and the instruction 29 to the display screen IC based on a preset time interval. In other words, it indicates that the display screen IC is initialized, is well prepared, and can execute the display task sent by the display driver. The preset time interval may be determined based on a hardware specification of the display screen IC. For display screen ICs of different models, different preset interval durations are specified for the instruction 11 and the instruction 29.

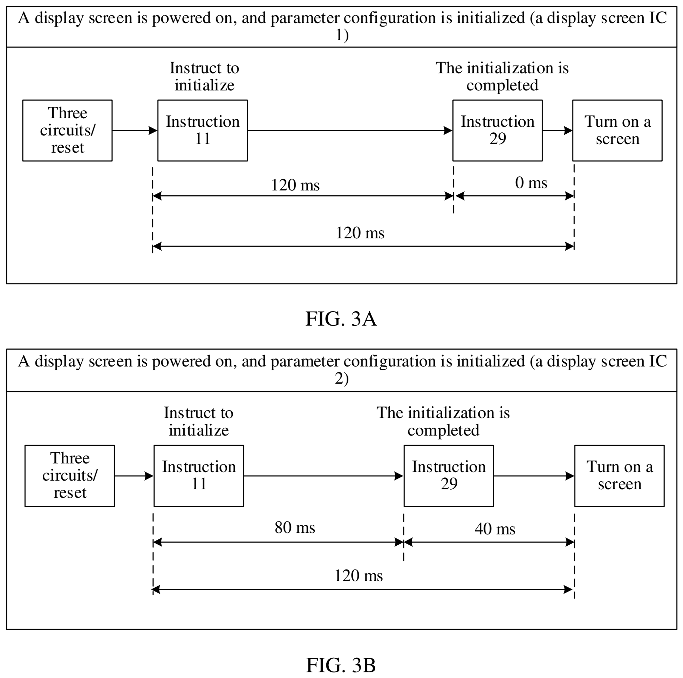

In an example, as shown in FIG. 3A, for a display screen IC 1, the preset interval duration specified for the instruction 11 and the instruction 29 is 120 ms. In other words, after the instruction 11 is sent, the instruction 29 is sent at an interval of 120 ms. In addition, a time difference between a sending time of the instruction 29 and a screen-on time is 0 ms. In other words, after the instruction 29 is sent, screen-on is immediately triggered. A time difference between a sending time of the instruction 11 and a screen-on time is 120 ms.

In another example, as shown in FIG. 3B, for a display screen IC 2, the preset interval duration specified for the instruction 11 and the instruction 29 is 80 ms, and the time difference between the sending time of the instruction 29 and the screen-on time is 40 ms. In other words, only after the 11 instruction is sent, the 29 instruction is sent at an interval of 80 ms, and only after the 29 instruction is sent, the screen is turned on after an interval of 40 ms. A time difference between a sending time of the instruction 11 and a screen-on time is 120 ms.

The preset interval duration specified for the instructions 11 and 29 above is an illustrative example. Specific settings may be made based on an actual use requirement. This is not limited in embodiments of the application. For ease of description, in the following embodiments of this application, an illustrative description is provided by using an example in which the instruction 29 is sent at an interval of 120 ms after the instruction 11 is sent.

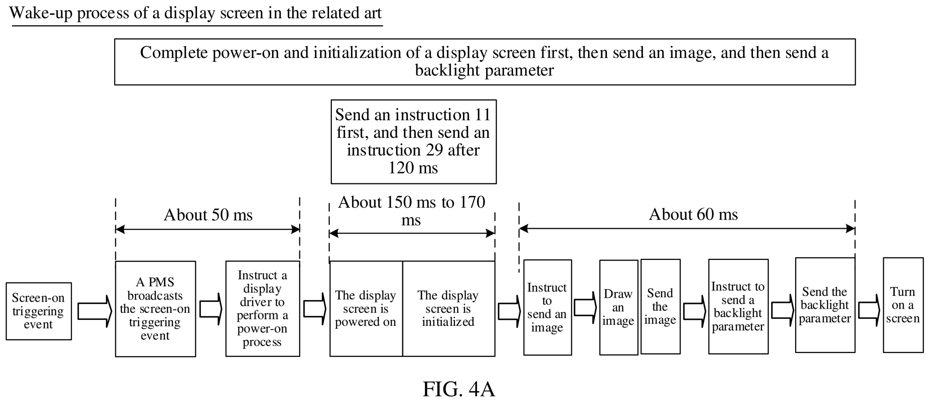

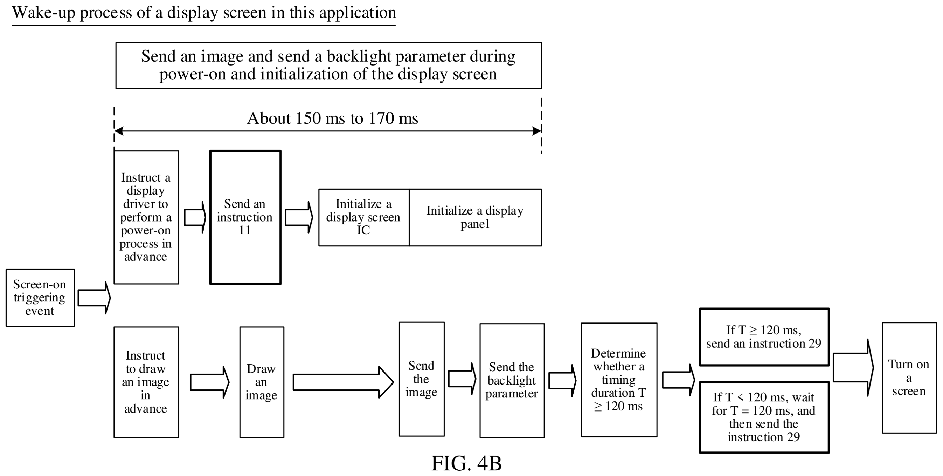

To better understand the optimization solution of embodiments of this application, the solution of embodiments of this application is described below in comparison with the related art in conjunction with FIG. 4A and FIG. 4B.

FIG. 4A shows a wake-up process of a display screen according to the related art. As shown in FIG. 4A, in the wake-up process of a display screen in the related art, power-on and initialization are first performed, an image is sent, and then a backlight parameter is sent.

Specifically, after a PMS module monitors a screen-on triggering event, the PMS module broadcasts the screen-on triggering event and instructs a display driver to perform a power-on process, which consumes about 50 ms. Further, the display screen IC is powered on and initialized, which consumes about 150 ms to 170 ms. Then, a process of sending an image is instructed to be performed, and a process of drawing an image (for example, drawing a lock screen interface) and the process of sending an image are performed. Then, the backlight parameter is instructed to be sent, and the backlight parameter is further determined and sent, which consumes about 60 ms. Finally, the display screen is turned on based on the backlight parameter and the lock screen interface is displayed on the display screen (which is referred to as screen-on for short), thereby waking up the display screen.

It should be noted that in the related art, an instruction 11 is sent first, and an instruction 29 is sent after 120 ms, thereby completing power-on and initialization of the display screen IC. After the initialization is completed, the process of sending an image and the process of sending a backlight parameter are performed. In the wake-up process of a display screen in the related art, power-on and initialization are performed first, the image is sent after the initialization, and then the backlight parameter is sent. The steps are sequentially performed, resulting in a long time of a wake-up process of the display screen.

It should be noted that in the related art, the instruction 11 and the instruction 29 are sequentially sent to the display screen in one program code block or data packet. In other words, instructions are sequentially sent through one program code block or data packet. The instruction 11 is first sent to the display screen, and the instruction 29 is sent to the display screen after 120 ms.

A difference from the related art lies in that, in this embodiment of this application, two program code blocks are respectively used to sequentially send the instruction 11 and the instruction 29 to the display screen. In other words, the instruction 11 is first sent through one program code block or data packet, and then the instruction 29 is sent through another program code block or data packet after 120 ms.

In this embodiment of this application, through "dividing" the instruction 11 and the instruction 29, the processes of powering on and initializing the display screen and the processes of sending the image and sending the backlight parameter may be simultaneously performed. A specific implementation process is described in detail below.

FIG. 4B shows a wake-up process of a display screen according to this application. As shown in FIG. 4B, in the wake-up process of a display screen of this application, processes of powering on and initializing a display screen and processes of sending an image and sending a backlight parameter are simultaneously performed, thereby reducing time of wakeup of the display screen. An optimization solution provided in this application for the wake-up process of a display screen includes the following three improvements.

**IMPROVEMENT 1:** After a PMS module monitors a screen-on triggering event, the PMS module immediately instructs a display driver to perform a power-on process. In this way, the display driver may perform the power-on process in advance.

**IMPROVEMENT 2:** After the PMS module monitors the screen-on triggering event, the PMS module instructs a drawing module in advance to perform a process of sending an image. In this way, the drawing module may draw a pattern displayed after the display screen is woken up (using a lock screen interface as an example) in advance, thereby reducing time.

**IMPROVEMENT 3:** In a process of powering on and initializing a display screen IC, the instruction 11 and the instruction 29 are divided, and are sent in a manner different from a manner in the related art. In program code of this application, the instruction 11 and the instruction 29 are divided, and processing logic is different from that in the related art.

Specifically, as shown in FIG. 4B, a PMS module instructs the display driver to perform a power-on process in advance. After the display driver receives the notification of performing the power-up process, the display driver triggers the display screen IC to power on, sends the instruction 11 to the display screen, and immediately returns a power-on completion (OK) message to the PMS module. In this application, timing is performed from the sending of the instruction 11. After the display screen receives the instruction 11, the display screen starts to be initialized. The initialization of the display screen includes initialization of the display screen IC and initialization of a display panel.

In addition, after the PMS module receives the completion (OK) message, the PMS module instructs the drawing module and the backlight module (black light, BL) of the completion message, the drawing module sends the lock screen interface obtained through drawing to the display screen, and then the backlight module obtains the backlight parameter and sends the backlight parameter to the display driver. The backlight parameter is determined based on an ambient light brightness. For example, a value range of the backlight parameter is (0, 255].

In the solution of this application, processes of powering on and initializing a display screen and processes of sending an image and sending a backlight parameter are simultaneously performed.

After the display driver receives the lock screen interface and receives the backlight parameter, the display driver determines whether a timing duration (denoted as T) is greater than or equal to 120 ms.

If the timing duration T is greater than or equal to 120 ms, it indicates that the display screen IC is initialized. In this case, the display driver sends the instruction 29.

If the timing duration T is less than 120 ms, it indicates that the display screen IC is not initialized. In this case, the display driver waits for the timing duration T to be equal to 120 ms and then sends the instruction 29.

When the display screen IC receives the instruction 29, the display screen IC turns on a display screen based on the backlight parameter and controls the display screen to display the lock screen interface, thereby waking up the display screen.

It should be noted that in the solution of this application, after the PMS module monitors a screen-on triggering event, the PMS module immediately instructs the display driver to perform the power-on process. In this way, the display driver may perform the power-on process in advance. The display driver first sends the instruction 11, and performs the process of sending an image and the process of sending a backlight parameter while the display screen IC is initialized. After the display driver receives the image of the lock screen interface and receives the backlight parameter, the display driver determines whether a time for sending the instruction 11 reaches 120 ms. If the time reaches 120 ms, the instruction 29 is sent, or if the time does not reach 120 ms, the instruction 29 is sent after the time reaches 120 ms. In the wake-up process of the display screen of this application, the processes of powering on and initializing the display screen and the processes of sending the image and sending the backlight parameter are simultaneously performed, which obviously reduces time of a wake-up process of the display screen.

Through the display control method provided in embodiments of this application, after a screen-on triggering condition is satisfied, the display screen is instructed to power on, the instruction 11 is sent to trigger initiation of the display screen, and the completion message is immediately returned to trigger the processes such as sending an image and sending a backlight parameter. Then it is determined whether a duration for which the instruction 11 is sent satisfies a delay condition. If the delay condition is satisfied, a display driver sends the instruction 29 to the display screen to indicate that initialization is completed. If the delay condition is not satisfied, the display driver then sends the instruction 29 to the display screen after the delay condition is satisfied. Then the display screen is turned on based on the backlight parameter, and the display screen displays a lock screen interface, thereby waking up the display screen. In the solution of this application, the instruction 11 and the instruction 29 are separately sent, so that the steps such as sending an image and sending a backlight parameter are performed during power-on and initialization of the display screen, thereby reducing time of a wake-up process of the display screen, and increasing a screen-on speed.

It should be noted that the foregoing screen-on triggering event refers to an event of triggering screen-on by pressing a power button, or triggering screen-on by double-tapping a screen, or triggering screen-on in another manner. For example, a hand is raised above a screen to trigger screen-on, which may be specifically determined based on an actual use requirement. This is not limited in this embodiment of this application.

The display control method provided in this embodiment of this application may be applied to a scenario in which screen-on is triggered by pressing the power button, or a scenario in which screen-on is triggered by double-tapping the screen. For ease of description, an implementation of a display control method is illustratively described in the following embodiment by using a scenario in which screen-on is triggered by pressing the power button as an example. An implementation used in a scenario in which screen-on is triggered by double-tapping the screen is not described in detail. Reference may be made to the detailed description of the implementation used in a scenario in which screen-on is triggered by pressing the power button.

It should be noted that the electronic device in this application is an electronic device having a display screen. For example, the electronic device may be a smart terminal such as a mobile phone, a tablet computer, and a smart watch. A specific technology and a specific device form used by the electronic device are not limited herein. For ease of description, an example in which the electronic device is the mobile phone is used in the following embodiments.

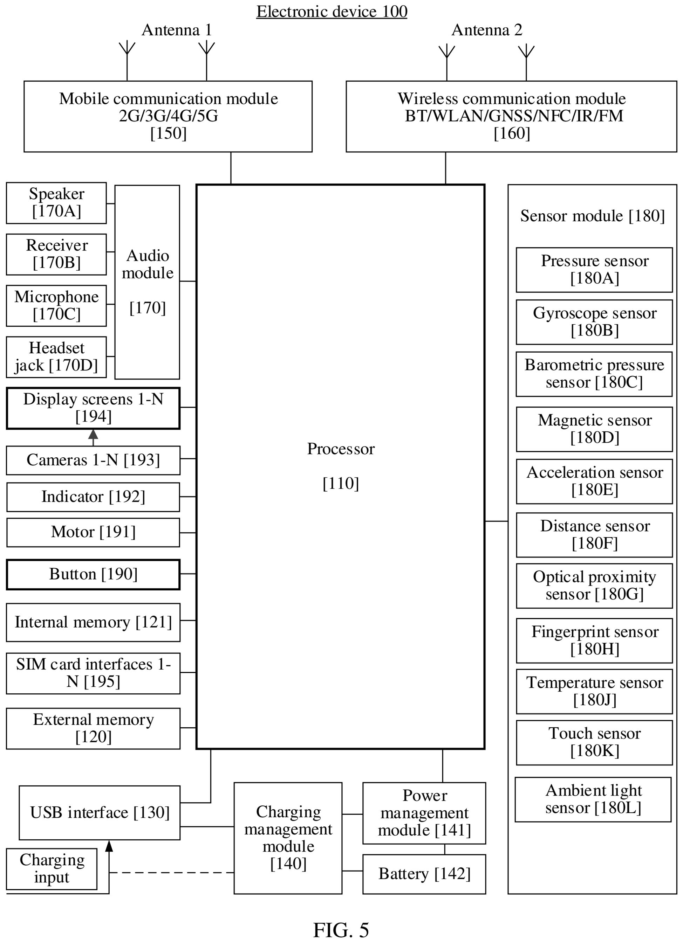

FIG. 5 is a schematic structural diagram of an electronic device according to an embodiment of this application. The electronic device 100 may include a processor 110, an external memory 120, an internal memory 121, a universal serial bus (universal serial bus, USB) interface 130, a charging management module 140, a power management unit 141, a battery 142, an antenna 1, an antenna 2, a mobile communication module 150, a wireless communication module 160, an audio module 170, a loudspeaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU), and the like. Different processing units may be separate devices, or may be integrated into one or more processors. For example, the processor 110 is configured to perform the display control method in embodiments of this application.

The controller may be a nerve center and a command center of the electronic device 100. The controller may generate an operation control signal based on instruction operation code and a time-sequence signal, and control obtaining and executing of instructions.

A memory may be further arranged in the processor 110, and is configured to store instructions and data. In some embodiments, the memory in the processor 110 is a cache memory. The memory may store instructions or data that is recently used or cyclically used by the processor 110. If the processor 110 needs to use the instructions or the data again, the processor may directly invoke the instructions or the data from the memory. Therefore, repeated access is avoided, a waiting time of the processor 110 is shortened, and system efficiency is improved.

The external memory 120 is usually an externally located memory. In this embodiment of this application, the external memory is a memory other than internal storage of the electronic device and the cache of the processor, and the memory is usually a non-volatile memory.

The internal memory 121, also referred to as the "internal storage", may be configured to store computer-executable program code. The executable program code includes instructions. The internal memory 121 may include a program storage area and a data storage area. The program storage area may store an operating system, an application required by at least one function (for example, a sound playback function and an image display function), and the like.

The display screen 194 is configured to display an image, a video, or the like. The display screen 194 includes a display panel. The display panel may use an organic light-emitting diode (organic light-emitting diode, OLED). In some embodiments, the electronic device 100 may include 1 or N display screens 194, N being a positive integer greater than 1.

The touch sensor 180K is also referred to as a "touch panel" or a touch panel (touch panel, TP) sensor. The touch sensor 180K may be arranged on the display screen 194. The touch sensor 180K and the display screen 194 form a touchscreen, which is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display screen 194.

The electronic device 100 implements a display function through the GPU, the display screen 194, the application processor, and the like. The GPU is an image processing microprocessor, and is connected to the display screen 194 and the application processor. The GPU is configured to perform mathematical and geometric computations for graphics rendering. The processor 110 may include one or more GPUs configured to execute program instructions to generate or change display information.

The button 190 includes a power button, and the power button is configured to trigger screen-on or screen-off of a display screen. For example, when a display screen is in a screen-off state, if a user presses the power button, a state of the display screen changes from the screen-off state to a screen-on state.

This embodiment of this application is specifically described above by using the electronic device 100 as an example. It should be understood that the structure shown in this embodiment of this application does not constitute a specific limitation on the electronic device 100. The electronic device 100 may have more or fewer components than those shown in the figure, or may combine two or more components, or may have a different component configuration. Various components shown in the figure may be implemented in hardware including one or more signal processing circuits or application-specific integrated circuits, software, or a combination of hardware and software.

In addition, an operating system, such as an iOS operating system developed by Apple, an Android open-source operating system developed by Google, or a Windows operating system developed by Microsoft, runs on the foregoing components. An application may be installed and run on the operating system.

The operating system of the electronic device 100 may use a layered architecture, an event-driven architecture, a microkernel architecture, a micro service architecture, or a cloud architecture. In this embodiment of this application, the software structure of the electronic device 100 is illustrated by using an Android (Android) system with a layered architecture as an example.

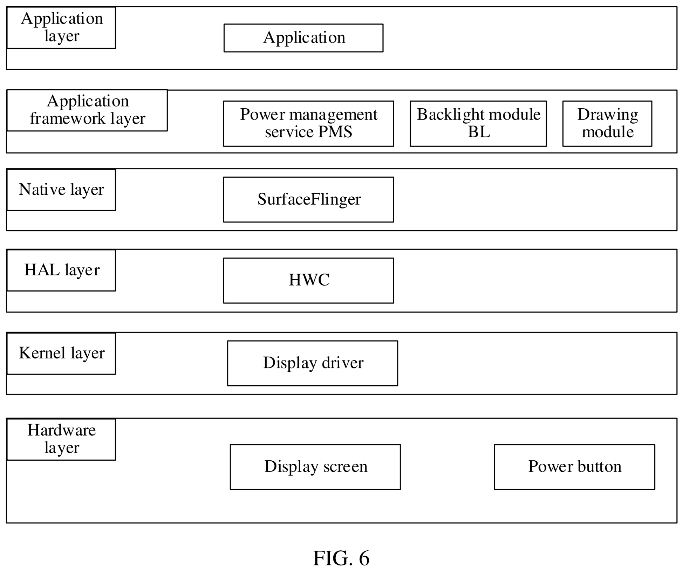

FIG. 6 is a block diagram of a software structure of an electronic device 100 according to an embodiment of this application.

In the hierarchical architecture, software is divided into a plurality of layers, and each layer has a clear role and task. The layers communicate with each other through a software interface. In some embodiments, the Android system is divided into five layers, which respectively are an application (applications) layer, an application framework (application framework) layer, a system Native library (referred to as Native layer), a hardware abstraction layer (hardware abstraction layer, HAL), and a kernel (kernel) layer from top to bottom. For ease of description, a hardware layer interacting with the foregoing software structure is further described in FIG. 6.

It should be noted that the Android system is a Linux-based operating system, and is mainly used for a portable device. Development of an upper-layer (for example, an application layer and an application framework layer) application in the Android system is usually completed based on Java. Some bottom-layer tasks are not easy to be implemented through Java. Therefore, when tasks in aspects such as a local service, a link library, or a hardware driver are involved, a C program usually needs to be allowed to be implemented, and the C program runs in the system Native library. The system Native library includes an interface for Java to call C++ code.

The application layer may include a series of application program packages. For example, the application layer may include an AOD application and another application. This is not limited in this embodiment of this application.

The application framework layer provides an application programming interface (application programming interface, API) and a programming framework for the application programs in the application layer. The application framework layer includes some predefined functions. In an example, the application framework layer may include a power management service (power manager service, PMS) module, a backlight module, a drawing module, and the like.

The power management service module is configured to manage power-on and power-off of a display screen IC.

The backlight (BL) module is configured to provide a backlight parameter for a display driver, and the display screen IC turns on a display screen based on the backlight parameter, namely, wakes up a display screen. The backlight parameter is determined based on an ambient light brightness. In other words, the ambient light brightness is proportional to the brightness of a display screen when the display screen is woken up. For example, higher ambient light brightness indicates higher brightness of the display screen when the display screen is woken up. In this way, it can be ensured that content displayed on the screen is clearly visible when the display screen is woken up and turned on, and the ambient light is not affected. Lower ambient light brightness indicates lower brightness when the display screen is woken up. In this way, it can be ensured that content displayed on the screen is clearly visible when the display screen is woken up and turned on, and light of the screen is not dazzling.

The drawing module is configured to provide a lock screen interface for the display driver, and the display screen IC controls the display screen to display the lock screen interface when the display screen is turned on.

The Native layer includes a plurality of functional modules. For example, in the solution of this application, the Native layer includes a surface drawing (SurfaceFlinger) service module. The SurfaceFlinger service module is configured to receive graphic display data from a plurality of sources, composite the graphic display data, and send composited graphic display data to a display device. Specific image display can be coordinately completed by a plurality of classes, such as a SurfaceFlinger, an HWC, and a display screen.

The HAL layer may include a hardware composition module (hwcomposer, HWC). The HWC has a function or capability of combining and displaying image data by hardware, providing hardware support for a SurfaceFlinger service.

The kernel layer is a layer between hardware and software. The kernel layer includes a display driver. The display driver may jointly control, in combination with an integrated chip (integrated circuit, IC) of a display screen, the display screen to change from screen-off to screen-on. The display driver may be further configured to set a backlight parameter of the display screen. When the backlight parameter of the display screen is set to 0, the display screen is switched to a screen-off state. When the backlight parameter of the display screen is set to any value in a range of (0, 255], the display screen is switched to a screen-on state.

The hardware layer may include a display screen (for example, an OLED or an LCD), and the display screen is correspondingly provided with a display screen IC. The display screen IC and the display screen may be independently arranged, or may be integrally arranged.

The hardware layer further includes a power button. When the display screen is in the screen-off state, the display screen can be triggered to change from the screen-off (also referred to as a screen off) to the screen-on by pressing the power button, thereby waking up the display screen.

It should be noted that although this embodiment of this application is described by using the Android system as an example, a basic principle is also applicable to an electronic device that is based on an operating system such as iOS or Windows.

An execution subject of the display control method provided in embodiments of this application may be the foregoing electronic device, or may be functional modules and/or functional entities in the electronic device that can implement the display control method, and the solutions of this application can be implemented in a hardware manner and/or a software manner. Details can be determined based on the actual use requirement. This is not limited in embodiments of this application. With reference to the accompanying drawings, the display control method provided in embodiments of this application is illustratively described by using the electronic device as an example.

In this embodiment of this application, the display screen is woken up from a dormant state and is switched to a screen-on state. In this case, all pixels of the display screen are turned on. After the display screen is woken up, the display screen may display a lock screen interface, or display a system desktop.

It should be noted that it is determined whether the display screen specifically displays a lock screen interface or a system desktop after the display screen is woken up by whether screen locking is set for the display screen. In other words, when screen locking is set for the display screen, the display screen displays the lock screen interface after the display screen is woken up. When screen locking is not set for the display screen, the display screen displays the system desktop after the display screen is woken up. For ease of description, an illustrative description is provided by using an example in which the display screen displays the lock screen interface after the display screen is woken up.

It should be further noted that as described above, in this embodiment of this application, the wake-up process of the display screen may involve an instruction 11 and an instruction 29. The instruction 11 is used for instructing power-on and initialization of the display screen IC. The power-on and the initialization of the display screen IC mean powering on and initializing the display screen IC that can control the display screen. In addition, the display driver sequentially sends the instruction 11 and the instruction 29 to the display screen IC based on a preset time interval, to complete the power-on and the initialization of the display screen IC. A specific value of the preset time interval is not limited in this embodiment of this application. A description is provided by using an example in which the preset time interval is 120 ms.

It may be understood that after the power-on and the initialization of the display screen IC are completed, the display screen IC is prepared to execute the display task sent by the display driver. Specifically, in the solution of this application, when the display screen IC is in the power-on state, the display screen IC may turn on the display screen based on the backlight parameter and control the display screen to display the lock screen interface.

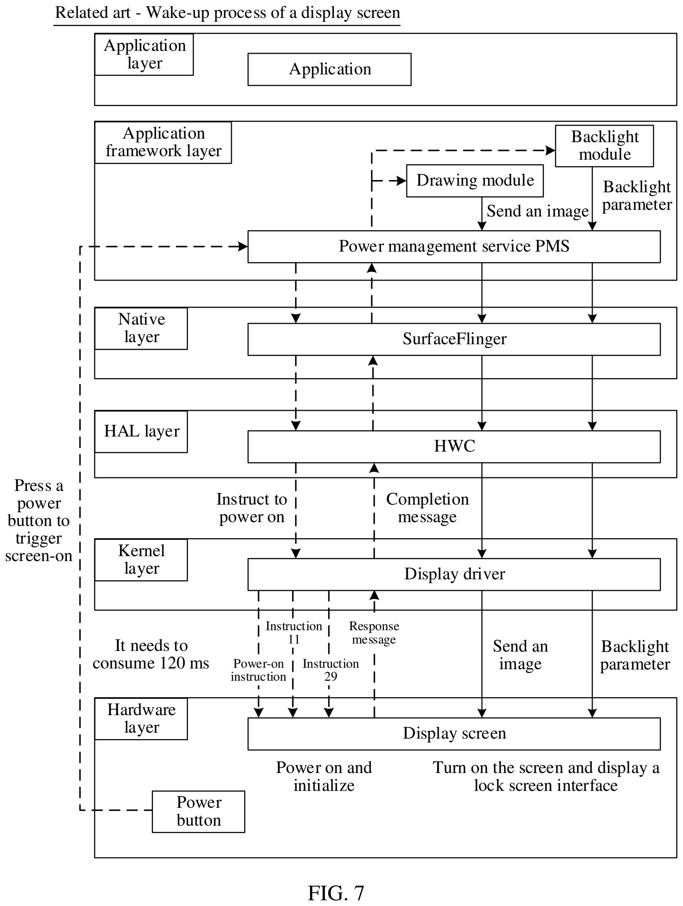

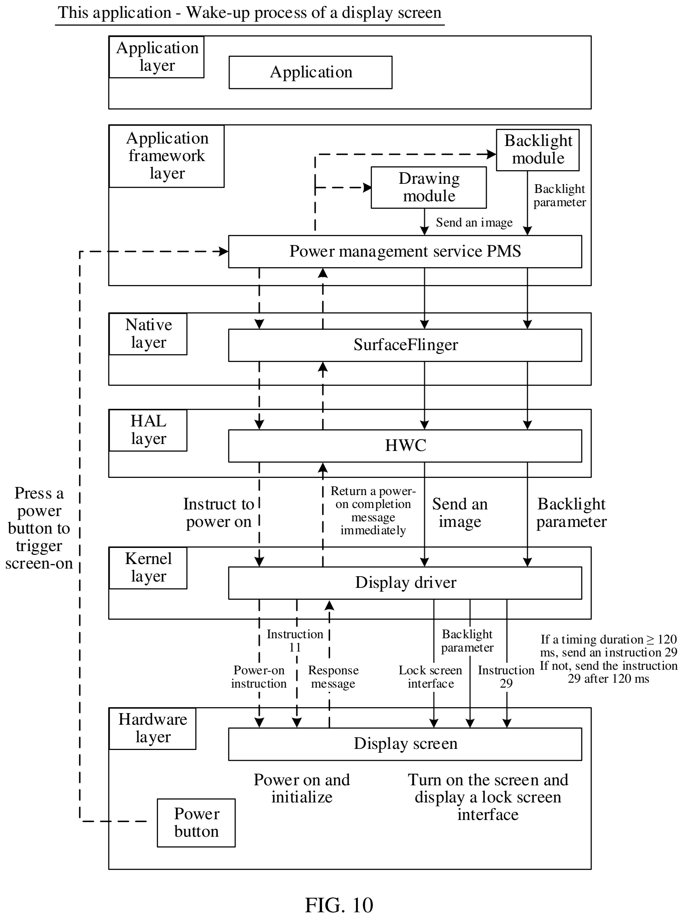

To highlight improvements of embodiments of this application related to the related art, the following compares the solution of this application with the related art in aspects such as a wake-up process of a display screen, a timing diagram, and a time consumption, and describes the improvements. First, the wake-up process of the display screen, the timing diagram, and the time consumption of the related art are described with reference to FIG. 7 to FIG. 9. Then with reference to FIG. 10 to FIG. 13, the display control method provided in embodiments of this application is described in terms of the wake-up process of the display screen, the timing diagram, and the time consumption. An illustrative description is provided by using a scenario in which the power button is pressed to trigger screen-on.

FIG. 7 is a schematic diagram of a software architecture of a wake-up process of a display screen in the related art. The wake-up process of a display screen may be divided into two stages. First stage: A process of completing initialization of the display screen by sending the instruction 11 and the instruction 29. Second stage: A process of sending an image and a process of sending a backlight parameter. As shown in FIG. 7, for a power-on process of a display screen IC, reference is made to a direction shown by a dashed arrow. For the process of sending an image and the process of sending a backlight parameter, reference is made to a direction shown by a solid arrow.

### First stage: The process of completing initialization of the display screen by sending the instruction 11 and the instruction 29

When an electronic device is in a screen-off state, a power management service module of the electronic device receives a message that the user presses the power button to trigger screen-on if a user presses a power button of the electronic device, and determines that a screen-on triggering event occurs.

It needs to be noted herein that for ease of description, it is illustratively shown that a message that a user presses the power button to trigger screen-on is directly transmitted from the power button to the power management service module. During actual implementation, the message that the user presses the power button to trigger screen-on may be transmitted by a plurality of modules in the software architecture to the power management service module. Specifically, the message may be determined based on an actual use requirement. This is not limited in this embodiment of this application.

The power management service module sends a power-on instruction (also referred to as a power-on notification) to a display driver, to notify the display driver to perform the power-on process. The power-on instruction is sequentially transmitted through a SurfaceFlinger service module and an HWC in a software architecture to the display driver. The display driver triggers the display screen to power on in response to the power-on instruction, and then sends an instruction 11 to the display screen, to instruct a display screen IC to power on and initialize the parameter configuration. When the instruction 11 is sent, the instruction 29 is sent at an interval of 120 ms, to instruct the display screen IC to complete initialization of the parameter configuration.

Then, the display driver returns a power-on completion message (also referred to as a completion message) to an upper layer. The power-on completion message is sequentially transmitted to the power management service module through the HWC and the SurfaceFlinger service module in the software architecture.

After receiving the power-on completion message, the power management service module sends the power-on completion message to a drawing module and a backlight module.

### Second stage: The process of sending an image and the process of sending a backlight parameter

The drawing module monitors the power-on completion message sent by the power management service module, and starts the process of sending an image. Specifically, the drawing module obtains a lock screen interface, sequentially transmits the lock screen interface to the display driver through the SurfaceFlinger service module and the HWC in the software architecture.

The backlight module monitors the power-on completion message sent by the power management service module, and starts the process of sending a backlight parameter. Specifically, the backlight module obtains the backlight parameter. After the process of sending an image is completed, the backlight module sequentially transmits the backlight parameter to the display driver through the SurfaceFlinger service module and the HWC in the software architecture. The backlight parameter is determined based on a brightness value of an environment in which the electronic device is located.

After the display driver receives the backlight parameter and the lock screen interface, the display driver sends the backlight parameter and the lock screen interface to the display screen IC, to trigger the display screen IC to complete the following display tasks: lighting up a display screen based on the backlight parameter, and controlling the display screen to display the lock screen interface.

It may be learned from FIG. 7 that in the wake-up process of a display screen, based on the related art, power-on and initialization of the display screen IC need to be completed first after a screen-on triggering event occurs, which consumes about 150 ms to 170 ms. After the power-on and the initialization of the display screen IC are completed, processes such as sending the image and sending the backlight parameter are completed, which consumes about 60 ms.

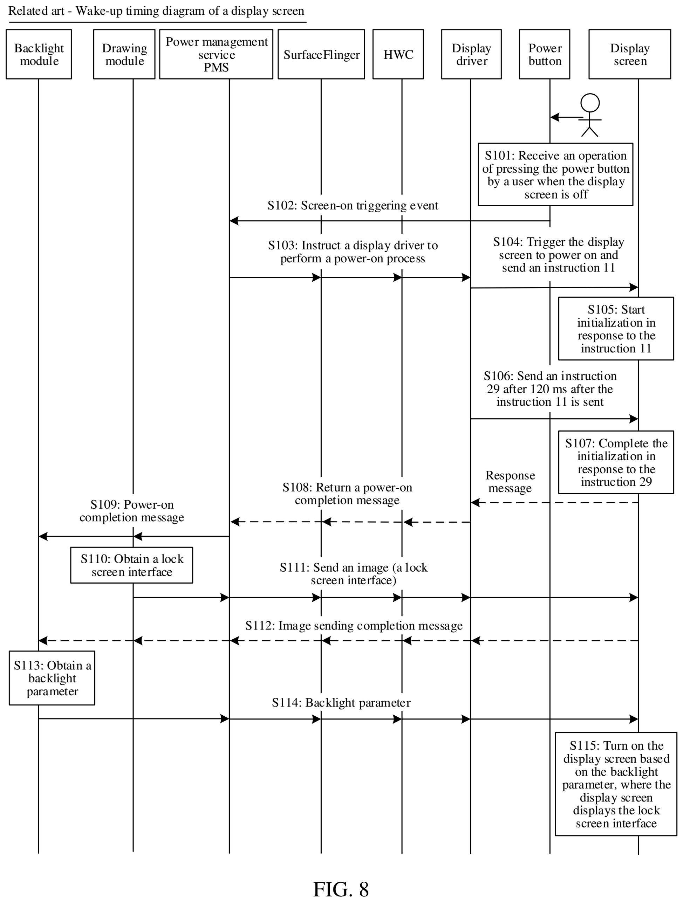

Based on FIG. 7, FIG. 8 shows a schematic timing diagram of a wake-up process of a display screen in the related art. As shown in FIG. 8, the method includes the following steps S101-S115.

S101: An electronic device receives an operation of pressing a power button by a user when a display screen is off.

An event in which the power button is pressed when the display screen is in the screen-off state may be referred to as a screen-on triggering event. It may be understood that the screen-on triggering event satisfies a screen-on triggering condition.

S102: The power button reports the screen-on triggering event to a power management service module.

S103: The power management service module sends a power-on instruction after monitoring the screen-on triggering event, where the power-on instruction is sequentially transmitted to a display driver through a SurfaceFlinger service module and an HWC.

The power-on instruction includes an instruction 11 and an instruction 29. The instruction 11 is equivalent to a start (start) instruction, and is used for instructing to power on a display screen IC and start initialization of the parameter configuration. The instruction 29 is equivalent to a preparation (ready) instruction, and is used for indicating that initialization of the parameter configuration of the display screen IC is completed, and preparing to execute a display task.

S104: The display driver sends the instruction 11 to the display screen.

S105: The display screen starts to be powered on and to initialize parameter configuration in response to the instruction 11.

S106: The display driver sends the instruction 29 to the display screen at an interval of 120 ms after the instruction 11 is sent.

It should be noted that the display driver sequentially sends the instruction 11 and the instruction 29 to the display screen IC based on a preset time interval. In other words, it indicates that the display screen IC is initialized, is well prepared, and can execute the display task sent by the display driver.

S107: The display screen completes the initialization of the parameter configuration in response to the instruction 29.

During actual implementation, when the display screen IC completes the initialization of the parameter configuration, the display screen may return a response message to the display driver, to feed back to the display driver that the display screen IC has completed the initialization of the parameter configuration.

S108: The display driver returns a power-on completion message to an upper layer, where the power-on completion message is sequentially transmitted to the power management service module through the HWC and the SurfaceFlinger service module.

S109: The power management service module broadcasts the power-on completion message.

S110: A drawing module obtains the lock screen interface after the drawing module monitors the power-on completion message.

S111: The drawing module sends the lock screen interface to the display driver. The lock screen interface is sequentially transmitted to the display driver through the power management service module, the SurfaceFlinger service module, and the HWC, and then the display driver sends the lock screen interface to the display screen.

During actual implementation, when the display screen IC receives the lock screen interface, the display screen may return a response message to the display driver, to feed back to the display driver that the display screen IC has received the lock screen interface.

S112: The display driver reports an image sending completion message to the drawing module.

S113: A backlight module obtains the backlight parameter after the backlight module receives the power-on completion message.

S114: The drawing module sends the backlight parameter to the display driver after the drawing module receives the image sending completion message. The backlight parameter is sequentially transmitted to the display driver through the power management service module, the SurfaceFlinger service module, and the HWC, and then the display driver sends the backlight parameter to the display screen.

S115: Turn on the display screen based on the backlight parameter, where the display screen displays the lock screen interface.

Specifically, the display driver sends the backlight parameter and the lock screen interface to the display screen IC, and the display screen IC completes the following display tasks: lighting up a display screen based on the backlight parameter, and controlling the display screen to display the lock screen interface.

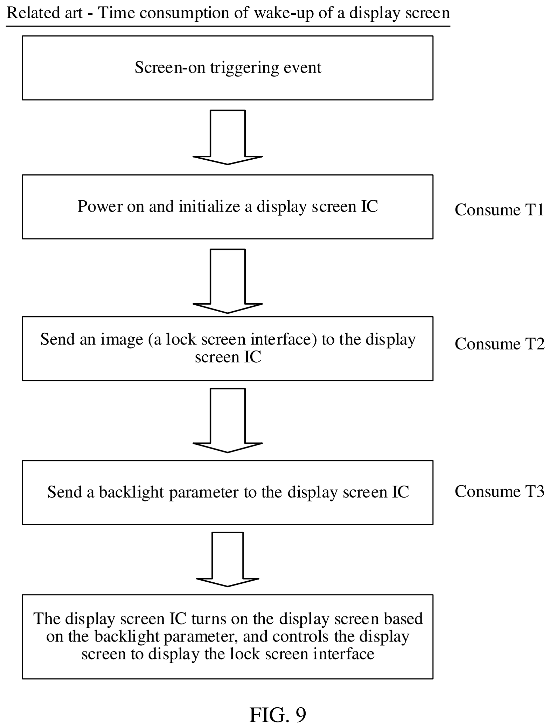

The wake-up process of the display screen and the timing diagram in the related art are respectively described above through FIG. 7 and FIG. 8. The time consumption of wakeup of the display screen in the related art is analyzed below with reference to FIG. 9.

As shown in FIG. 9, in the wake-up process of the display screen in the related art, power-on and initialization of a display screen IC need to be completed first, which consumes T1. After the power-on and the initialization of the display screen IC are completed, the image sending is completed, which consumes T2; and the sending of the backlight parameter is completed, which consumes T3. In combination, to complete the wake-up process of the display screen, at least T1+T2+T3 needs to be consumed. Therefore, the wake-up process of the display screen has a problem of long-time consumption.

To resolve the foregoing problem of long-time consumption of the wake-up process of the display screen in the related art, the following improvements are made in the process in this embodiment of this application.

After a PMS module monitors a screen-on triggering event, the PMS module immediately instructs a display driver to perform a power-on process. In this way, the display driver may perform the power-on process in advance. In addition, the PMS module instructs to perform the process of sending an image in advance. In this way, an image (using a lock screen interface as an example) displayed after a display screen is woken up is drawn in advance and the image is sent.

In addition, in a process of powering on and initializing the display screen IC, the instruction 11 and the instruction 29 in the power-on instruction are divided, and are sent in a manner different from a manner in the related art. For example, after the display driver receives the notification of performing the power-on process, the display driver first sends the instruction 11, and returns a power-on completion (OK) message to the PMS module, thereby triggering the process of sending an image and the process of sending a backlight parameter.

In this case, steps of powering on and initializing the display screen IC, sending the image, and sending the backlight parameter are simultaneously performed.

It should be noted that in this application, timing is performed from the sending of the instruction 11.

After the display driver receives the lock screen interface and receives the backlight parameter, the display driver determines whether a timing duration (denoted as T) is greater than or equal to 120 ms.

If the timing duration T is greater than or equal to 120 ms, it indicates that the display screen IC is initialized. In this case, the display driver sends the instruction 29 to the display screen IC.

If the timing duration T is less than 120 ms, it indicates that the display screen IC is not initialized. In this case, the display driver waits for the timing duration T to be equal to 120 ms, and then sends the instruction 29 to the display screen IC.

When the display screen IC receives the instruction 29, the display screen IC turns on the display screen based on the backlight parameter, and controls the display screen to display a lock screen interface, thereby waking up the display screen.

In the solutions of this application, processes of powering on and initializing the display screen and processes of sending the image and sending the backlight parameter are simultaneously performed. Therefore, time is greatly reduced, the display screen can be quickly woken up, the screen-on speed is increased, and the user experience is improved.

FIG. 10 is a schematic diagram of a software architecture of a wake-up process of a display screen according to an embodiment of this application. The wake-up process of a display screen may be divided into two stages. First stage: A process of triggering power-on of a display screen IC by sending an instruction 11. Second stage: A process of sending an image and a process of sending a backlight parameter. Third stage: A process of sending the instruction 29 when a condition is satisfied.

### First stage: The process of triggering power-on of a display screen IC by sending an instruction 11

When an electronic device is in a screen-off state, a PMS module of the electronic device receives a message that the user presses the power button to trigger screen-on if a user presses a power button of the electronic device, and determines that a screen-on triggering event occurs.

Different from the process in the related art shown in FIG. 7, in this embodiment of this application, after the PMS module monitors a screen-on triggering event, the PMS module immediately instructs the display driver to perform the power-on process. In this way, the display driver may perform the power-on process in advance. After the display driver receives the notification of performing the power-on process, the display driver first sends a power-on instruction, then sends the instruction 11, and returns a power-on completion (OK) message to the PMS module. Then, the PMS module broadcasts the power-on completion message. The power-on completion message triggers the process of sending an image and the process of sending a backlight parameter.

Different from the related art in which the power-on completion message is returned after the instruction 29 is sent, to trigger the process of sending an image and the process of sending a backlight parameter, steps after the solution of this application is optimized are as follows. After the instruction 11 is sent, the power-on completion message is immediately returned, so as to trigger the process of sending an image and the process of sending a backlight parameter. Therefore, in the improved solution of this application, steps of power-on, initialization, image sending, and backlight parameter sending are simultaneously performed, so as to reduce time of wakeup of the display screen.

### Second stage: The process of sending an image and the process of sending a backlight parameter

The drawing module monitors the power-on completion message broadcasted by the power management service module, and starts the process of sending an image. Specifically, the drawing module obtains a lock screen interface, sequentially transmits the lock screen interface to the display driver through the SurfaceFlinger service module and the HWC in the software architecture.

The backlight module monitors the power-on completion message broadcasted by the power management service module, and starts the process of sending a backlight parameter. Specifically, the backlight module obtains a backlight parameter, and sequentially transmits the backlight parameter to the display driver through the SurfaceFlinger service module and the HWC in the software architecture. The backlight parameter is determined based on a brightness value of an environment in which the electronic device is located.

### Third stage: The process of sending the instruction 29 when a condition is satisfied

It should be noted that the display driver sequentially sends the instruction 11 and the instruction 29 to the display screen IC based on a preset time interval. In other words, it indicates that the display screen IC is initialized, is well prepared, and can execute the display task sent by the display driver. In other words, using an example in which the preset interval duration is 120 ms, at least 120 ms are needed to complete the initialization. Therefore, after the instruction 11 is sent, an interval of at least 120 ms is needed before the instruction 29 is sent.

In this application, timing is performed from the sending of the instruction 11. After the display driver receives the lock screen interface and receives the backlight parameter, the display driver determines whether the timing duration T is greater than or equal to 120 ms.

If the timing duration T is greater than or equal to 120 ms, it indicates that the display screen IC is initialized and the condition is satisfied. In this case, the display driver sends the instruction 29 to the display screen IC.

If the timing duration T is less than 120 ms, it indicates that the display screen IC is not initialized and the condition is not satisfied. In this case, the display driver waits for the timing duration T to be equal to 120 ms, and then sends the instruction 29 to the display screen IC.

When the display screen IC receives the instruction 29, the display screen IC is initialized, is well prepared, and can execute the display task sent by the display driver. The display driver sends the backlight parameter and the lock screen interface to the display screen IC, and triggers the display screen IC to complete tasks of wakeup and screen-on of the display screen. The display screen IC may turn on the display screen based on the backlight parameter and control the display screen to display the lock screen interface, thereby implementing wakeup and screen-on of the display screen.

In the solutions of this application, processes of powering on and initializing the display screen and processes of sending the image and sending the backlight parameter are simultaneously performed. Therefore, time is greatly reduced, the display screen can be quickly woken up, the screen-on speed is increased, and the user experience is improved.

For example, in the related art, based on a hardware requirement of a screen chip specification, the power-on and the initialization of the display screen IC consumes about 150 ms to 170 ms. In addition, the processes of sending an image and sending a backlight parameter consume about 60 ms. In the solution of this application, the processes of sending the image and sending the backlight parameter are performed during power-on and initialization of the display screen IC. Therefore, about 60 ms are saved. Therefore, time required for wakeup of the display screen is greatly reduced.

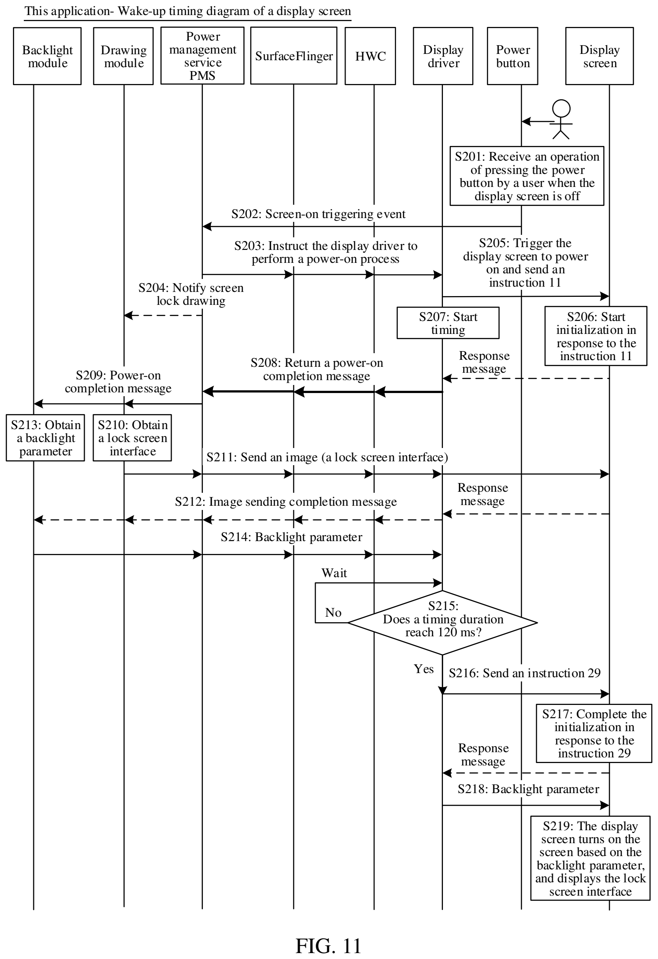

Based on FIG. 10, FIG. 11 is a schematic timing diagram of a wake-up process of a display screen according to an embodiment of this application. As shown in FIG. 11, the method includes the following steps S201-S219.

S201: Receive an operation of pressing a power button by a user when a display screen is off.

S202: The power button reports the screen-on triggering event to a power management service module.

S203: The power management service module sends a power-on notification, where the power-on notification is sequentially transmitted to a display driver through a SurfaceFlinger service module and an HWC.

S204: The power management service module instructs a drawing module to perform screen lock drawing.

Compared with a process in the related art in which after an instruction 11 and an instruction 29 are sent and a power-on completion message is returned, the drawing module is instructed to perform screen lock drawing, in the solution of this application, after a screen-on triggering event, the drawing module is immediately instructed to perform screen lock drawing. Because the screen lock drawing is instructed in advance, the drawing module may draw the lock screen interface in advance or obtain the lock screen interface in another manner, which can save time.

It should be noted that a sequence of performing S203 and S204 is not limited in this embodiment of this application. In an example, S203 may be first performed, and then S204 is performed; or S204 may be first performed, and then S203 is performed; or S203 and S204 may be simultaneously performed.

S205: The display driver triggers the display screen to be powered on after receiving the power-on instruction, and sends the instruction 11 to the display screen.

S206: The display screen starts to be initialized in response to the instruction 11.

During actual implementation, when the display screen IC starts to be initialized, the display screen may return a response message to the display driver, to feed back to the display driver that the display screen starts to be initialized.

S207: The display driver starts timing after the instruction 11 is sent.

S208: The display driver returns a power-on completion message to an upper layer, where the power-on completion message is sequentially transmitted to the power management service module through the HWC and the SurfaceFlinger service module.

Compared with a process in the related art in which the display driver sends the instruction 11, then sends the instruction 29 after 120 ms, and then returns the power-on completion message, a difference between solutions of this application lies in the following. After sending the instruction 11, the display driver directly returns the power-on completion message, and then sends the instruction 29 at 120 ms or after 120 ms. It should be noted that specifically, it may be determined whether the instruction 29 is sent at 120 ms or the instruction 29 is sent after 120 ms through the following determining logic of S215.

S209: The power management service module broadcasts the power-on completion message.

S210: A drawing module obtains the lock screen interface after the drawing module receives the power-on completion message.

For example, the drawing module may directly obtain the lock screen interface drawn in advance.

S211: The drawing module sends the lock screen interface to the display driver. The lock screen interface is sequentially transmitted to the display driver through the power management service module, the SurfaceFlinger service module, and the HWC, and then the display driver sends the lock screen interface to the display screen.

During actual implementation, when the display screen IC receives the lock screen interface, the display screen may return a response message to the display driver, to feed back to the display driver that the display screen IC has received the lock screen interface.

S212: The drawing module receives the image sending completion message reported by the display driver, and then sends the image sending completion message to the backlight module.

S213: A backlight module obtains the backlight parameter after the backlight module receives the power-on completion message.

During actual implementation, the backlight parameter may be stored through a backlight register. For example, the backlight instruction may carry a backlight parameter 0. In this case, 0 may be written to the backlight register, and the backlight parameter 0 indicates to turn off the backlight of the display. In this way, in response to the backlight instruction, the display screen IC may read the backlight parameter 0 from the backlight register, and control to turn off the backlight of the display based on the backlight parameter 0.

S214: The backlight module sends the backlight parameter to the display driver after the backlight module receives the image sending completion message. The backlight parameter is sequentially transmitted to the display driver through the power management service module, the SurfaceFlinger service module, and the HWC.

S215: The display driver determines whether the timing duration reaches 120 ms after the display driver receives the backlight parameter.

Compared with a process in the related art in which the display driver receives the backlight parameter and then sends the backlight parameter to the display screen, a difference in the solutions of this application lies in the following. The display driver first determines whether the timing duration reaches the first preset duration after receiving the backlight parameter, and then determines, based on a determining result, whether to send the instruction 29 to the display screen. After the instruction 29 is sent to the display screen, the backlight parameter is then sent to the display screen.

An illustrative description is provided herein by using an example in which the first preset duration is still 120 ms.

If the timing duration reaches 120 ms (for example, the timing duration is 130 ms, which exceeds 120 ms), S216 continues to be performed. In other words, the instruction 29 is sent to the display screen.

If the timing duration does not reach 120 ms, S215 is returned to and performed. In other words, the timing duration is waited to reach 120 ms, and then the instruction 29 is sent to the display screen.

S216: The display driver sends the instruction 29 to the display screen.

S217: The display screen is initialized in response to the instruction 29.

When the display screen is initialized, the display screen may return a response message to the display driver, to feed back to the display driver that the display screen is initialized.

S218: The display driver sends the backlight parameter to the display screen.

S219: The display screen turns on the screen based on the backlight parameter, and displays the lock screen interface.

Specifically, the display driver sends the backlight parameter to the display screen IC, and the display screen IC turns on the display screen based on the backlight parameter and controls the display screen to display the lock screen interface.

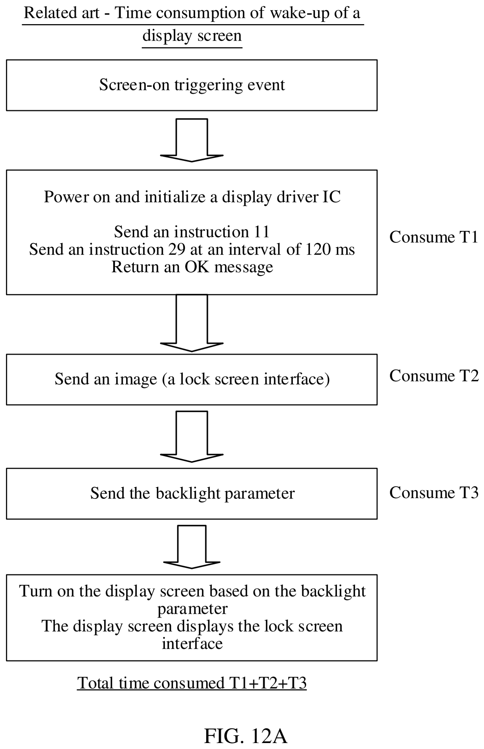

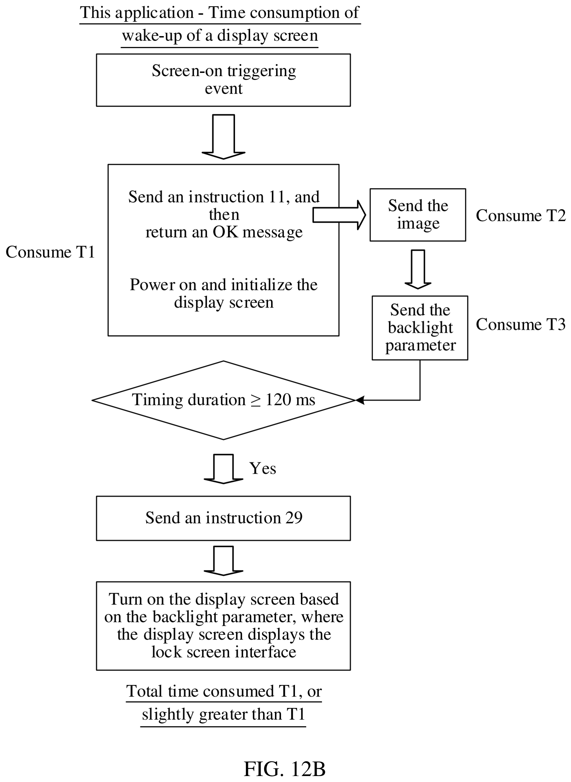

The wake-up process of the display screen and the timing diagram according to this application are respectively described above through FIG. 10 and FIG. 11. A time consumption of waking up the display screen according to this application is analyzed below with reference to FIG. 12A and FIG. 12B.

Referring to FIG. 12A, in the wake-up process of the display screen in the related art, power-on and initialization of a display screen IC need to be completed first, which consumes T1. An instruction 11 is sent first, an instruction 29 is sent at an interval of 120 ms, and then an OK message is returned. Then, after the power-on and the initialization of the display screen IC are completed, the image sending is completed, which consumes T2; and the sending of the backlight parameter is completed, which consumes T3. In combination, to complete the wake-up process of the display screen, at least T1+T2+T3 needs to be consumed.

Then, reference is made to FIG. 12B. In the wake-up process of the display screen according to this application, after a screen-on triggering event occurs, the display driver immediately performs a power-on process, the display driver first sends an instruction 11 to the display screen, to trigger initialization of the display screen, and then the display driver immediately returns an OK message, to trigger processes of sending an image and sending a backlight parameter. In this way, when the display screen is initialized, the process of sending an image and the process of sending a backlight parameter may be performed.

Then, after the display driver receives the lock screen interface and receives the backlight parameter, the display driver determines whether the timing duration is greater than or equal to 120 ms. If the timing duration is greater than or equal to 120 ms, the instruction 29 is sent, or if the timing duration is less than 120 ms, the instruction 29 is sent after the 120 ms is reached. The instruction 29 is sent, which indicates that the display screen IC is initialized, is well prepared, and can execute the display task sent by the display driver.

In this case, the display screen IC may turn on the display screen based on the backlight parameter and control the display screen to display the lock screen interface, thereby completing wakeup of the display screen.

In the solution of this application, the power-on and the initialization of the display screen IC are completed, which consumes T1 (120 ms). Sending the image and sending the backlight parameter are completed during power-on and initialization of the display screen IC. In combination, to complete the wake-up process of the display screen, at least T1 (120 ms) or slightly greater than T1 (120 ms) needs to be consumed.

In the wake-up process of the display screen of this application, the processes of powering on and initializing the display screen and the processes of sending the image and sending the backlight parameter are simultaneously performed, which obviously reduces time of a wake-up process of the display screen. Therefore, according to the display control method provided in embodiments of this application, the time required for waking up the display screen can be greatly reduced, and the user experience can be improved.

FIG. 11 is described above for a case in which an interval of 120 ms is used between sending the instruction 11 and sending the instruction 29. Namely, after the instruction 11 is sent, 120 ms is waited for, and then the instruction 29 is sent. No delay exists after the instruction 29 is sent. In other words, only one delay is required to wait after the instruction 11 is sent until the display screen is turned on.

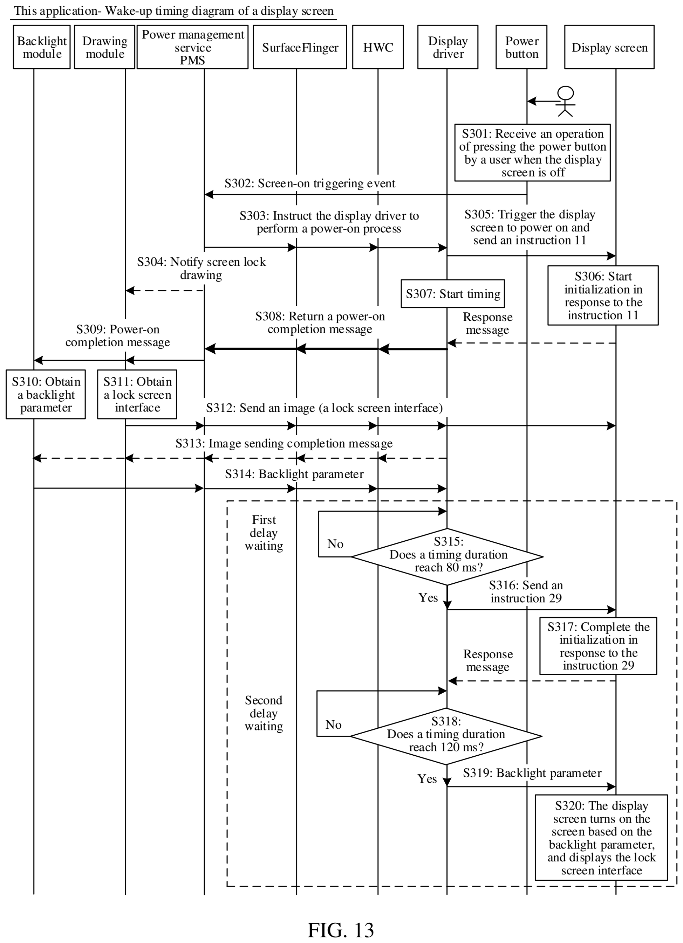

FIG. 13 is another schematic timing diagram of a wake-up process of a display screen according to an embodiment of this application. FIG. 13 differs from FIG. 11 in that in FIG. 13, one delay waiting exists between sending the instruction 11 and sending the instruction 29, and one delay waiting also exists between sending the instruction 29 and lighting up the display screen. For example, according to a requirement of a specification of a display screen IC, after the instruction 11 is sent, 80 ms needs to be waited to send the instruction 29. After the instruction 29 is sent, 40 ms needs to be waited to turn on the display screen. In other words, two delay waiting is needed between sending the instruction 11 and lighting up the display screen.

As shown in FIG. 13, the method includes the following steps S301-S320.

For descriptions of S301-S314, reference may be made to S201-S214 in FIG. 11 for details. Details are not described herein again.

S315: The display driver determines whether the timing duration reaches 80 ms.

If the timing duration reaches 80 ms, the following S316 continues to be performed. If the timing duration does not reach 80 ms, S315 is returned to and performed. In other words, the timing duration is waited to reach 80 ms, and then S316 is performed. This is a first delay waiting.

S316: The display driver sends the instruction 29 to the display screen.

S317: The display screen is initialized in response to the instruction 29.

When the display screen is initialized, the display screen may return a response message to the display driver, to feed back to the display driver that the display screen is initialized.

S318: The display driver determines whether the timing duration reaches 120 ms.

If the timing duration reaches 120 ms, the following S319 continues to be performed. If the timing duration does not reach 120 ms, S318 is returned to and performed. In other words, the timing duration is waited to reach 120 ms, and then S318 is performed. This is a second delay waiting.

S319: The display driver sends the backlight parameter to the display screen.

S320: The display screen turns on the screen based on the backlight parameter, and displays the lock screen interface.

Specifically, the display driver sends the backlight parameter to the display screen IC, and the display screen IC turns on the display screen based on the backlight parameter and controls the display screen to display the lock screen interface.

It should be noted that in embodiments of this application, "greater than" may be replaced with "greater than or equal to", and "less than or equal to" may be replaced with "less than". Alternatively, "greater than or equal to" may be replaced with "greater than", and "less than" may be replaced with "less than or equal to".

Each embodiment described in this specification may be an independent solution, or embodiments may be combined based on internal logic, and such solutions all fall within the protection scope of this application.

This application further provides a chip. The chip is coupled to a memory. The chip is configured to read and execute a computer program or instructions stored in the memory, to perform the method in the foregoing embodiments.

This application further provides an electronic device. The electronic device includes a chip. The chip is configured to read and execute a computer program or instructions stored in a memory, so that the method in the foregoing embodiments is performed.

An embodiment further provides a computer-readable storage medium. The computer-readable storage medium has a computer instruction stored therein. When the computer instruction runs on an electronic device, the electronic device is enabled to perform the foregoing related method steps to implement the display control method in the foregoing embodiments.

An embodiment further provides a computer program product. The computer-readable storage medium has program code stored therein. When the computer program product runs on a computer, the computer is caused to perform the foregoing related steps, to implement the display control method in the foregoing embodiments.

In addition, an embodiment of this application further provides an apparatus. The apparatus may be specifically a chip, an assembly, or a module. The apparatus may include a processor and a memory that are connected. The memory is configured to store computer-executable instructions. When the apparatus runs, the processor may execute the computer-executable instructions stored in the memory, to cause the chip to perform the display control method in the foregoing method embodiments.

The electronic device, the computer-readable storage medium, the computer program product, or the chip provided in embodiments may be configured to perform the corresponding method provided above. Therefore, for beneficial effect that can be achieved, reference is made to the beneficial effect of the corresponding method provided above. Details are not described herein again.

In embodiments provided in this application, it should be understood that the disclosed apparatus and method may be implemented in another manner. For example, the described apparatus embodiment is merely an example. For example, the module or unit division is merely logical function division and may be another division in actual implementation. For example, a plurality of units or components may be combined or integrated into another apparatus, or some features may be ignored or not performed. In addition, the displayed or discussed mutual coupling or direct coupling or communication connection may be implemented through some interfaces. The indirect coupling or communication connection between the apparatuses or units may be implemented in an electronic, mechanical, or another form.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display control method, applied to an electronic device comprising a display screen, wherein the display screen is provided with a first display integrated chip IC, and the method comprises:
receiving, by a display driver, a power-on instruction from a power management service module when a preset condition is satisfied;
triggering, by the display driver, the first display IC to power on in response to the power-on instruction, and sending a start instruction to the first display IC, wherein the start instruction is used to instruct the first display IC to initialize;
returning, by the display driver, a completion message to the power management service module;
receiving, by the display driver, a screen-on pattern, and sending the screen-on pattern to the first display IC;
receiving, by the display driver, a backlight parameter;
sending, by the display driver, a preparation instruction to the first display IC when a first timing duration is greater than or equal to a first preset duration, wherein the preparation instruction is used to instruct the first display IC to complete initialization, and the first timing duration is a duration timed starting from a time when the start instruction is sent; and
sending, by the display driver, the backlight parameter to the first display IC, to trigger the first display IC to turn on the display screen based on the backlight parameter and control the display screen to display the screen-on pattern.

2. The method according to claim 1, wherein after the receiving, by the display driver, the backlight parameter, the method further comprises:
sending, by the display driver, the preparation instruction to the first display IC until the first timing duration is greater than or equal to the first preset duration when the first timing duration is less than the first preset duration.

3. The method according to claim 1 or 2, wherein the first preset duration is related to a hardware specification of the first display IC.

4. The method according to any one of claims 1 to 3, wherein the first preset duration is 120 milliseconds.

5. The method according to any one of claims 1 to 4, further comprising:
sending, by the power management service module, the screen-on pattern and the backlight parameter to the first display IC in response to the completion message.

6. The method according to claim 5, wherein the sending, by the power management service module, the screen-on pattern to the first display IC in response to the completion message comprises:
instructing, by the power management service module in response to the completion message, a drawing module to send the screen-on pattern; and
receiving, by the power management service module, the screen-on pattern from the drawing module, and sending the screen-on pattern to the first display IC.

7. The method according to any one of claims 1 to 6, further comprising:
instructing, by the power management service module, the drawing module to draw the screen-on pattern when the preset condition is satisfied.

8. The method according to claim 5, wherein the sending, by the power management service module, the backlight parameter to the first display IC in response to the completion message comprises:
instructing, by the power management service module in response to the completion message, a backlight module to send the backlight parameter; and
receiving, by the power management service module, the backlight parameter from the backlight module, and sending the backlight parameter to the first display IC.

9. The method according to any one of claims 1 to 8, further comprising:
determining, by the backlight module, the backlight parameter based on an ambient light brightness of an environment in which the electronic device is located.

10. The method according to any one of claims 1 to 9, wherein the power-on instruction is sent by the power management service module and transmitted by a surface drawing SurfaceFlinger service module and a hardware composition HWC module, and reaches the display driver; and
the completion message is sent by the display driver and transmitted by the HWC module and the SurfaceFlinger service module, and reaches the power management service module.

11. The method according to any one of claims 1 to 10, wherein the preset condition is: receiving an operation of pressing a power button by a user when the display screen is in a screen-off state; or receiving a preset operation performed by the user on the display screen when the display screen is in a screen-off state.

12. A display control method, applied to an electronic device comprising a display screen, wherein the display screen is provided with a second display IC, and the method comprises:
receiving, by a display driver, a power-on instruction from a power management service module when a preset condition is satisfied;
triggering, by the display driver, the second display IC to power on in response to the power-on instruction, and sending a start instruction to the second display IC, wherein the start instruction is used to instruct the second display IC to initialize;
returning, by the display driver, a completion message to the power management service module;
receiving, by the display driver, a screen-on pattern, and sending the screen-on pattern to the second display IC;
receiving, by the display driver, a backlight parameter;
sending, by the display driver, a preparation instruction to the second display IC when a first timing duration is greater than or equal to a second preset duration; and then sending, by the display driver, the backlight parameter to the second display IC when the first timing duration is greater than or equal to a third preset duration, to trigger the second display IC to turn on the display screen based on the backlight parameter and control the display screen to display the screen-on pattern, wherein the third preset duration is greater than the second preset duration, and the first timing duration is a duration timed starting from a time when the start instruction is sent.

13. The method according to claim 12, wherein after the receiving, by the display driver, the backlight parameter, the method further comprises:
sending, by the display driver, the preparation instruction to the second display IC until the first timing duration is greater than or equal to the second preset duration when the first timing duration is less than the second preset duration.

14. The method according to claim 12 or 13, wherein after the sending, by the display driver, the preparation instruction to the second display IC, the method further comprises:
sending, by the display driver, the backlight parameter to the second display IC until the first timing duration is greater than or equal to the third preset duration when the first timing duration is less than the third preset duration.

15. The method according to any one of claims 12 to 14, wherein the second preset duration and the third preset duration are related to a hardware specification of the second display IC.

16. The method according to any one of claims 12 to 15, wherein the second preset duration is 80 milliseconds, and the third preset duration is 120 milliseconds.

17. The method according to any one of claims 12 to 16, further comprising:
sending, by the power management service module, the screen-on pattern and the backlight parameter to the second display IC in response to the completion message.

18. An electronic device, comprising a display screen, a processor, a memory, and a computer program stored in the memory, wherein the processor is configured to execute the computer program, to cause the electronic device to implement the method according to any one of claims 1 to 17.

19. A computer-readable storage medium, having a computer program stored therein, wherein the computer program, when run on an electronic device, causes the electronic device to perform the method according to any one of claims 1 to 17.

20. A computer program product, comprising computer program code, wherein the computer program code, when executed by an electronic device, causes the electronic device to perform the method according to any one of claims 1 to 17.
